# EUROPÄISCHE PATENTSCHRIFT

(11) **EP 3 660 466 B1**
(45) Veröffentlichungstag und Bekanntmachung des Hinweises auf die Patenterteilung: **29.12.2021**
(21) Anmeldenummer: 19210508.8
(22) Anmeldetag: 21.11.2019
(51) Int. Cl.: G01D 11/30, G01D 11/24, G01L 19/00

(54) **BEFESTIGUNGSVORRICHTUNG FÜR EIN SENSORGEHÄUSE**
MOUNTING DEVICE FOR A SENSOR HOUSING
DISPOSITIF DE FIXATION POUR UN LOGEMENT DE CAPTEUR

(30) Priorität: 30.11.2018 DE 102018009382
(43) Veröffentlichungstag der Anmeldung: 03.06.2020
(73) Patentinhaber: Dräger Safety AG & Co. KGaA, 23560 Lübeck (DE)
(72) Erfinder: Wruck, Norbert, 23568 Lübeck (DE); Böhme, Till Robert, 25479 Ellerau (DE)
(74) Vertreter: Weber-Lehn, Christian

(56) Entgegenhaltungen:
- DE-A1-102007 012 703
- DE-A1-102008 004 358
- DE-A1-102012 201 018
- DE-B3-102016 211 755

## Beschreibung

### Beschreibung

Die Erfindung betrifft eine Befestigungsvorrichtung für ein Sensorgehäuse und ein System zur Befestigung eines Sensors. Weiterhin betrifft die Erfindung die Verwendung des Systems zur Befestigung eines Sensors.

DE 10 2012 201018 A1 und DE 10 2016 211755 B3 offenbaren ähnliche Befestigungsvorrichtungen.

Sensorgehäuse werden in Industrie und Landwirtschaft genutzt, um Sensoren in einer Umgebung mit hoher Staubbelastung oder hoher Spritzwasserbelastung vor Beschädigungen und Verschmutzungen zu schützen. Hierbei handelt es sich beispielsweise um Gassensoren zur Kontrolle der Einhaltung von Grenzwerten oder Richtwerten für bestimmte Gase innerhalb einer lufttechnischen Anlage, wie etwa einer Anlage zur Luftaufbereitung. In staubhaltigen und spritzwasserbelasteten Umgebungen erfordern derart verwendete Sensorgehäuse eine staubdichte und spritzwasserdichte Bauweise.

Die Befestigung eines derartigen Sensorgehäuses erfolgt typischerweise durch Aufhängen oder durch Verschrauben an einer Wand.

Aufgabe der vorliegenden Erfindung ist es, eine verbesserte Befestigung für ein Sensorgehäuse, insbesondere eine Befestigung für ein Sensorgehäuse mit verbesserter Funktionalität, bereitzustellen.

Die Erfindung wird durch die unabhängigen Ansprüche definiert.

Gemäß einem ersten Aspekt der Erfindung wird zur Lösung dieser Aufgabe eine Befestigungsvorrichtung für ein Sensorgehäuse mit einem Eingriffsbereich, einem Verbindungsbereich und einer Druckausgleichsleitung vorgeschlagen. Der Eingriffsbereich ist ausgebildet, einen Eingriff für ein externes Befestigungselement, insbesondere für einen Haken zum Aufhängen der Befestigungsvorrichtung, für eine Befestigung, insbesondere eine dauerhafte Befestigung, der Befestigungsvorrichtung über das externe Befestigungselement bereitzustellen.

Der Verbindungsbereich ist ausgebildet, eine spritzwasserdichte und staubdichte Verbindung zwischen Befestigungsvorrichtung und Sensorgehäuse bereitzustellen.

Die Druckausgleichsleitung ist ausgebildet, einen Druckausgleich zwischen einem Inneren des Sensorgehäuses und einer Umgebung der Befestigungsvorrichtung zu ermöglichen. Hierbei weist die Druckausgleichsleitung im verbundenen Zustand von Befestigungsvorrichtung und Sensorgehäuse mindestens eine Umgebungsöffnung zu der Umgebung der Befestigungsvorrichtung und mindestens eine Gehäuseöffnung im Verbindungsbereich derart auf, dass durch die Druckausgleichsleitung der Druckausgleich zwischen dem Inneren des Sensorgehäuses und der Umgebung über die Umgebungsöffnung und die Gehäuseöffnung möglich ist.

Der Erfindung liegt die Erkenntnis zugrunde, dass eine Druckausgleichsleitung, die aufgrund einer staub- und spritzwasserdichten Bauweise an einem Sensorgehäuse notwendig ist, um einen sicheren Transport ohne Überdruck im Sensorgehäuse zu ermöglichen, ein gewisses Volumen im Sensorgehäuse einnimmt und dabei Kosten für dieses zusätzliche Bauteil verursacht. Weiterhin wurde erkannt, dass die Befestigung des Sensorgehäuses ein notwendiges Bauteil darstellt, das für die zusätzliche Funktion des Druckausgleichs geeignet ist. Die gestellte Aufgabe wird vor diesem Hintergrund gelöst durch eine Integration der Druckausgleichsleitung in die Befestigungsvorrichtung.

Vorteilhaft erlaubt die erfindungsgemäße Lösung einen Druckausgleich zwischen Umgebung und dem Inneren des Sensorgehäuses, ohne dass hierfür eine Druckausgleichsleitung innerhalb des Sensorgehäuses notwendig ist. Hierdurch wird eine kleinere Bauweise des Sensorgehäuses ermöglicht. Weiterhin wird vorteilhaft die Funktionsfähigkeit eines in dem Sensorgehäuse angeordneten Sensors nicht durch einen über den Sensor oder Teile des Sensors ausgeführten Druckausgleich gefährdet.

Besonders vorteilhaft stellt die erfindungsgemäße Lösung eine kostengünstige Alternative zu bestehenden Möglichkeiten des Druckausgleichs dar. So ist das aufwendige Einbauen einer speziell zum Druckausgleich ausgebildeten Druckausgleichsleitung in einer Gehäusewand des Sensorgehäuses nicht notwendig, weil die Druckausgleichsleitung in die Befestigungsvorrichtung integriert ist. Weiterhin ist die erfindungsgemäße Druckausgleichsleitung besonders günstig in der Herstellung, da lediglich die Befestigungsvorrichtung entsprechend der Erfindung angepasst werden muss.

Ein Vorteil der erfindungsgemäßen Befestigungsvorrichtung besteht darin, dass sie nahezu unabhängig von einer Formgestaltung des Sensorgehäuses ausgebildet sein kann. Die Druckausgleichsleitung innerhalb der erfindungsgemäßen Befestigungsvorrichtung kann jedoch auch bei der Herstellung einfach und kostengünstig an ein zu befestigendes Sensorgehäuse angepasst werden.

Die Verbindung im Verbindungsbereich kann erfindungsgemäß sowohl lösbar ausgebildet sein, als auch eine dauerhafte, nicht lösbare oder schwer lösbare Verbindung zwischen Befestigungsvorrichtung und Sensorgehäuse darstellen.

Die erfindungsgemäße Druckausgleichsleitung wird gebildet durch die Gehäuseöffnung, die Umgebungsöffnung und einen zwischen Gehäuseöffnung und Umgebungsöffnung gebildeten Luftkanal. Der Luftkanal ist vorzugsweise ein Hohlraum innerhalb der Befestigungsvorrichtung.

Das Sensorgehäuse ist nicht Teil der Befestigungsvorrichtung. Die Befestigungsvorrichtung ist im Verbindungsbereich jedoch so ausgestaltet, dass eine spritzwasserdichte und staubdichte Verbindung zwischen Befestigungsvorrichtung und Sensorgehäuse möglich ist.

Ein Sensorgehäuse ist ein Gehäuse oder ein Teil eines Gehäuses, das dazu geeignet ist, einen Sensor aufzunehmen. Dies kann auch ein Gehäuse für andere Objekte sein, die anstelle eines Sensors in dem Gehäuse angeordnet sind.

Nachfolgend werden bevorzugte Ausführungsformen der erfindungsgemäßen Befestigungsvorrichtung beschrieben.

In einer besonders bevorzugten Ausführungsform ist die Befestigungsvorrichtung einteilig ausgebildet. In dieser Ausführungsform kann die Befestigungsvorrichtung besonders vorteilhaft durch ein Urformverfahren, insbesondere durch 3D-Druck hergestellt werden. In dieser Ausführungsform ist die Druckausgleichsleitung durch einen geeignet geformten Hohlraum innerhalb der einteiligen Befestigungsvorrichtung gebildet. Die Befestigungsvorrichtung gemäß dieser Ausführungsform ist vorteilhaft kostengünstig, da die Herstellung mehrerer Teile sowie die dabei notwendige Verbindung dieser Teile miteinander vermieden werden.

In einer besonders vorteilhaften Ausführungsform ist die Druckausgleichsleitung derart gekrümmt, dass eine Druckausgleichsstromrichtung sich während eines Druckausgleichs mindestens einmal ändert, wobei die Druckausgleichsstromrichtung eine Richtung eines Luftstroms während des Druckausgleichs relativ zur Befestigungsvorrichtung beschreibt. Besonders vorteilhaft an der Druckausgleichsleitung dieser Ausführungsform ist der Staubund Spritzwasserschutz, der durch die Krümmung in der Druckausgleichsleitung ermöglicht wird. So können Wasser und Staub zumindest nicht direkt durch einen Spritzwasser- oder Blasschub in das Sensorgehäuse gelangen. In einer besonders vorteilhaften Variante dieser Ausführungsform ist die Druckausgleichsleitung derart gekrümmt, dass sich die Druckausgleichsstromrichtung um mehr als 90°, insbesondere um mindestens 180°, ändert. In dieser Variante ist es besonders unwahrscheinlich, dass Schmutz, Staub oder Spritzwasser durch die gekrümmte Druckausgleichsleitung in das Sensorgehäuse eindringen. Für den Fall, dass sich die Druckausgleichsstromrichtung um mindestens 180° ändert, kann vorteilhaft die Schwerkraft dazu beitragen, dass Verunreinigungen, die in die Druckausgleichsleitung eingedrungen sind, diese wieder durch die Umgebungsöffnung verlassen, oder sich in einem Bereich der Druckausgleichsleitung absetzen, aber jedenfalls nicht über die Druckausgleichsleitung in das Sensorgehäuse eindringen. In einer alternativen oder ergänzenden Variante dieser Ausführungsform ist die Druckausgleichsleitung an mindestens zwei Stellen derart gekrümmt, dass sich die Druckausgleichsstromrichtung während eines Druckausgleichs mindestens zweimal ändert. In dieser Variante ist es wiederum besonders unwahrscheinlich, dass Verunreinigungen durch die Druckausgleichsleitung in das Sensorgehäuse eindringen, da selbst Verunreinigungen, die eine erste Krümmung der Druckausgleichsleitung an der ersten Stelle passiert haben, sehr wahrscheinlich nicht eine zweite Krümmung der Druckausgleichsleitung an der zweiten Stelle passieren. In einem vorteilhaften Beispiel dieser Variante führen die beiden Krümmungen zu einer Änderung der Druckausgleichsstromrichtung innerhalb der Druckausgleichsleitung von mindestens 180°. In einem weiteren vorteilhaften Beispiel dieser Variante ist die Druckausgleichsleitung zumindest in einem Teilbereich spiralförmig ausgebildet.

In einer bevorzugten Ausführungsform weist die Druckausgleichsleitung mindestens zwei Umgebungsöffnungen zu der Umgebung der Befestigungsvorrichtung auf. Die zweite Umgebungsöffnung ermöglicht einen Durchtritt eines Luftstroms durch die Druckausgleichsleitung selbst dann, wenn eine Verstopfung, beispielsweise durch eine starke Verunreinigung, in dem Bereich der ersten Umgebungsöffnung der Druckausgleichsleitung vorliegt. Weiterhin kann die zweite Umgebungsöffnung dadurch vorteilhaft sein, dass eine Verunreinigung, die durch die erste Umgebungsöffnung in die Druckausgleichsleitung eindringt, durch die zweite Umgebungsöffnung die Druckausgleichsleitung wieder verlassen kann, ohne in das Sensorgehäuse eingedrungen zu sein. In einer besonders vorteilhaften Variante dieser Ausführungsform, ist die Druckausgleichsleitung zwischen der ersten Umgebungsöffnung und der zweiten Umgebungsöffnung ohne eine dazwischenliegende Prallfläche ausgebildet. Durch die Vermeidung einer Prallfläche wird vermieden, dass ein Spritzwasser- oder Staubschub in der Druckausgleichsleitung gebremst wird. Hierdurch verringert sich die Wahrscheinlichkeit einer andauernden Verunreinigung der Druckausgleichsleitung.

In einer besonders bevorzugten Variante der vorherigen Ausführungsform ist die Druckausgleichsleitung derart T-förmig ausgebildet, dass sie zwei Umgebungsöffnungen an gegenüberliegenden Stellen des Eingriffsbereichs und die Gehäuseöffnung im Verbindungsbereich aufweist. In dieser Variante ist es wiederum besonders vorteilhaft, wenn die Druckausgleichsleitung zwischen der ersten Umgebungsöffnung und der zweiten Umgebungsöffnung ohne eine dazwischenliegende Freifläche ausgebildet ist. Hierdurch ist es möglich, dass eine Verunreinigung im Rahmen eines Spritzwasser- oder Staubschubs nach dem Eintritt durch eine der Umgebungsöffnungen durch die andere Umgebungsöffnung die Druckausgleichsleitung wieder verlässt. Besonders vorteilhaft ist hierbei ein Beispiel der Variante dieser Ausführungsform, in dem die Druckausgleichsleitung symmetrisch in der Befestigungsvorrichtung ausgebildet ist. In diesem Beispiel ist ein Eintritt von Verunreinigungen durch die Umgebungsöffnung für beide Umgebungsöffnungen gleich wahrscheinlich. Hierdurch werden einseitige Ablagerungen vermieden. Weiterhin kann für eine symmetrische Führung der Druckausgleichsleitung besonders einfach ein Vorliegen von Prallflächen innerhalb der Druckausgleichsleitung vermieden werden.

In einer weiteren Ausführungsform weist die Druckausgleichsleitung mehr als zwei Umgebungsöffnungen auf. In einer Variante dieser Ausführungsform sind die mehr als zwei Umgebungsöffnungen in regelmäßigen Abständen auf einem Umfang der Befestigungsvorrichtung angeordnet. In dieser Variante kann besonders gut sichergestellt werden, dass der Druckausgleich nicht durch eine Verstopfung einer Umgebungsöffnung verhindert wird.

In einer Ausführungsform der erfindungsgemäßen Befestigungsvorrichtung ist in oder an der Druckausgleichsleitung eine Membran angeordnet, die flüssigkeitsdicht und gasdurchlässig ist. Eine solche Membran verhindert vorteilhaft das Eindringen von Schmutz, insbesondere von Spritzwasser, in das Sensorgehäuse, während ein Gasaustausch im Rahmen des Druckausgleichs möglich ist. In einer bevorzugten Variante dieser Ausführungsform ist die Membran in der Umgebungsöffnung oder an der Gehäuseöffnung angeordnet. In einem vorteilhaften Beispiel dieser Variante ist in der Gehäuseöffnung ein O-Ring angeordnet, der die an der Gehäuseöffnung angeordnete Membran in einer vorbestimmten Position innerhalb der Verbindung zwischen Befestigungsvorrichtung und Sensorgehäuse fixiert. In einer weiteren Variante dieser Ausführungsform ist die Membran innerhalb der Druckausgleichsleitung angeordnet. Die Membran im Rahmen dieser Ausführungsform ist vorzugsweise eine Polytetrafluorethylen (PTFE-) Membran.

In einer bevorzugten Ausführungsform der erfindungsgemäßen Befestigungsvorrichtung ist die Verbindung im Verbindungsbereich formschlüssig und/oder kraftschlüssig ausgebildet. In einer Variante dieser Ausführungsform ist die Verbindung eine formschlüssige Steckverbindung. In einer anderen Variante dieser Ausführungsform ist die Verbindung eine Schraubverbindung. Die formschlüssige Verbindung ermöglicht vorteilhaft, dass sich die Verbindung selbst unter starker physischer Beanspruchung von Befestigungsvorrichtung und/oder Sensorgehäuse nicht löst.

In einer Ausführungsform, weist ein von der Druckausgleichsleitung gebildeter Luftkanal einen Durchmesser von mehr als 1mm auf, insbesondere einen Durchmesser zwischen 2mm und 3mm auf. Ein derart gewählter Durchmesser ermöglicht vorteilhaft den Druckausgleich. Ein Durchmesser unterhalb von 3mm ermöglicht vorteilhaft eine kleine Angriffsfläche für Schmutz, Staub und Spritzwasser.

In einer weiteren Ausführungsform weist die Umgebungsöffnung der Druckausgleichsleitung einen Querschnitt von mehr als 3mm² auf. Hierdurch wird vorteilhaft sichergestellt, dass selbst bei geringfügigen Ablagerungen von Schmutz ein Druckausgleich sichergestellt ist. Weiterhin erlaubt die Befestigungsvorrichtung gemäß dieser Ausführungsform eine einfache Herstellung, da auch geringe fertigungstechnische Ungenauigkeiten nicht zu einem Verschluss der Druckausgleichsleitung führen.

In einer Ausführungsform der erfindungsgemäßen Befestigungsvorrichtung weist die Umgebungsöffnung eine Mehrzahl von Lamellen auf, die sich in die Druckausgleichsleitung erstrecken. Die Lamellen erschweren vorteilhaft ein Eindringen von Verschmutzungen durch die Umgebungsöffnung in die Druckausgleichsleitung. In einer alternativen Ausführungsform ist an der Umgebungsöffnung ein Gitter angeordnet. Das Gitter erschwert vorteilhaft das Eindringen von Verschmutzungen durch die Umgebungsöffnung in die Druckausgleichsleitung.

Erfindungsgemäß ist der Eingriffsbereich derart ausgebildet, dass ein Aufhängen des Sensorgehäuses über die Befestigungsvorrichtung möglich ist. Erfindungsgemäß ist der Eingriffsbereich als ein Haken oder Haltering ausgebildet, und mindestens eine Umgebungsöffnung der Druckausgleichsleitung ist an einer Außenfläche des Hakens oder Halterings ausgebildet. Die Druckausgleichsleitung weist durch die Formgebung des Hakens oder Halterings eine Krümmung auf. Das externe Befestigungselement kann derart in den

Haken oder Haltering eingreifen, dass dadurch die Umgebungsöffnung teilweise abgedeckt ist. Hierdurch haben Schmutz, Staub und Spritzwasser eine geringe Angriffsfläche, um durch die Umgebungsöffnung in die Druckausgleichsleitung einzudringen.

In einer bevorzugten Ausführungsform weist die Druckausgleichsleitung im Bereich der Umgebungsöffnung derart in eine Richtung, dass im aufgehängten Zustand der Befestigungsvorrichtung ein von der Gehäuseöffnung zu der Umgebungsöffnung gerichteter Luftstrom im Bereich der Umgebungsöffnung in Richtung der Schwerkraft weist. In dieser Ausführungsform verringert die Schwerkraft das Risiko, dass Schmutz, Staub und Spritzwasser dauerhaft in der Druckausgleichsleitung verbleiben. So hilft die Schwerkraft, durch die Umgebungsöffnung eingetretene Verunreinigungen wieder aus der Druckausgleichsleitung zu entfernen, ehe sie sich ablagern oder weiter in die Druckausgleichsleitung eindringen können.

In einer bevorzugten Ausführungsform ist die Befestigungsvorrichtung zumindest teilweise aus Polyamid gebildet. Dieses Material wird beispielsweise bei der Herstellung mittels 3D-Druck verwendet, und ermöglicht somit eine kostengünstige Herstellung der Befestigungsvorrichtung. In einer alternativen Ausführungsform ist die Befestigungsvorrichtung zumindest teilweise durch ein Metall gebildet. Hierdurch wird eine besonders große Stabilität der Befestigungsvorrichtung ermöglicht.

In einer weiteren Ausführungsform ist die Befestigungsvorrichtung durch ein Material mit hydrophoben Oberflächeneigenschaften, insbesondere durch PTFE gebildet. In dieser Ausführungsform ist es besonders unwahrscheinlich, dass Spritzwasser sich auf der Befestigungsvorrichtung oder in der Druckausgleichsleitung dauerhaft absetzt.

In einer weiteren Ausführungsform ist die Befestigungsvorrichtung durch einen UV-stabilen Kunststoff gebildet. Hierdurch kann auch bei regelmäßiger Sonneneinstrahlung sichergestellt werden, dass die Verbindung spritzwasserdicht und staubdicht ist.

In einer weiteren Ausführungsform ist in der Druckausgleichsleitung mindestens ein Querschnittssprung und/oder ein Puffervolumen angeordnet. Hierdurch kann die Wahrscheinlichkeit reduziert werden, dass eine Verschmutzung, die bereits in die Druckausgleichsleitung eingetreten ist, bis in das Sensorgehäuse geführt wird. In einer besonders bevorzugten Variante dieser Ausführungsform ist weiterhin die flüssigkeitsdichte und gasdurchlässige Membran an oder in der Druckausgleichsleitung angeordnet, und der Querschnittssprung und/oder das Puffervolumen ist zwischen Membran und Umgebungsöffnung angeordnet. Hierdurch kann der Querschnittssprung und/oder das Puffervolumen die Wahrscheinlichkeit verringern, dass Staub, Schmutz oder Spritzwasser die Membran erreichen. Dies ist insbesondere dadurch vorteilhaft, dass Schmutz, der durch die Membran gelangt ist, kaum noch durch die Umgebungsöffnung die Befestigungsvorrichtung, beispielsweise durch Diffusion, verlassen kann.

Gemäß einem zweiten Aspekt der Erfindung, wird zur Lösung der erfindungsgemäßen Aufgabe ein System zur Befestigung eines Sensors vorgeschlagen, mit einer Befestigungsvorrichtung gemäß mindestens einer Ausführungsform gemäß dem ersten Aspekt der Erfindung, und einem Sensorgehäuse.

In dem erfindungsgemäßen Sensorgehäuse ist ein Sensor anordnenbar. Weiterhin weist das Sensorgehäuse einen Gegenverbindungsbereich auf, der dazu ausgebildet ist, mit dem Verbindungsbereich der Befestigungsvorrichtung eine spritzwasserdichte und staubdichte Verbindung auszubilden.

Das System umfasst die Befestigungsvorrichtung gemäß dem ersten Aspekt der Erfindung und mithin alle Vorteile der erfindungsgemäßen Befestigungsvorrichtung.

Weiterhin vorteilhaft an dem System gemäß dem zweiten Aspekt der Erfindung ist, dass der Verbindungsbereich und der Gegenverbindungsbereich aufeinander abgestimmt sind, sodass eine besonders sichere, spritzwasserdichte und staubdichte Verbindung realisiert werden kann. Der Gegenverbindungsbereich kann weiterhin einen vorteilhaften Zugang zu dem Inneren des Sensorgehäuses ermöglichen, falls die Befestigungsvorrichtung nicht mit dem Sensorgehäuse verbunden ist. Das ermöglicht eine besonders robuste Bauweise des erfindungsgemäßen Systems.

In einer vorteilhaften Ausführungsform bildet die Befestigungsvorrichtung eine Kappe oder einen Deckel oder einen Verschluss für das Sensorgehäuse. Hierbei ermöglicht ein Trennen der Verbindung zwischen Befestigungsvorrichtung und Sensorgehäuse, oder ein Zustand vor dem Verbinden während der Herstellung des Systems, dass der Sensor und/oder die Elektronik des Sensors über eine entsprechende Öffnung in dem Sensorgehäuse in dem Sensorgehäuse angeordnet werden können.

In einer vorteilhaften Ausführungsform des erfindungsgemäßen Systems sind der Verbindungsbereich der Befestigungsvorrichtung und der Gegenverbindungsbereich des Sensorgehäuses ausgebildet, eine Schraubverbindung als spritzwasserdichte und staubdichte Verbindung bereitzustellen. Eine derartige Schraubverbindung ist besonders günstig in der Herstellung. Weiterhin kann hierdurch ein besonders sicherer Spritzwasserschutz und Staubschutz bereitgestellt werden. Die Schraubverbindung ist weiterhin dadurch vorteilhaft, dass sie eine besonders leichte und schnelle Austauschbarkeit der Befestigungsvorrichtung an dem Sensorgehäuse ermöglicht. Dies ist insbesondere dann vorteilhaft, wenn die Befestigungsvorrichtung aufgrund von Verschleiß oder Verschmutzung ausgetauscht werden muss.

In einer weiteren Ausführungsform des erfindungsgemäßen Sensors weist die spritzwasserdichte und staubdichte Verbindung einen an der Gehäuseöffnung der Befestigungsvorrichtung angeordneten O-Ring auf. Der O-Ring ermöglicht einen besonders sicheren Spritzwasserschutz und Staubschutz in dem Verbindungsbereich. In einer Variante dieser Ausführungsform erfolgt die Verbindung zwischen Befestigungsvorrichtung und Sensorgehäuse unter Pressung des O-Rings. In einer weiteren ergänzenden oder alternativen Variante ist eine flüssigkeitsdichte und gasdurchlässige Membran durch den O-Ring an das Sensorgehäuse gepresst. Dies ermöglicht das Vorliegen einer vorbestimmten Position der Membran.

In einer weiteren Ausführungsform weist das erfindungsgemäße System weiterhin einen Gassensor, insbesondere einen Gassensor auf elektrochemischer Basis, auf, insbesondere einen NH3-Sensor, der in dem Sensorgehäuse angeordnet ist. Das Bereitstellen von Sensorgehäuse und Gassensor ermöglicht in einer Variante dieser Ausführungsform, dass das Sensorgehäuse eine Aufnahme für eine dauerhafte Lagerung des Gassensors innerhalb des Sensorgehäuses aufweist. Hierdurch kann der Gassensor besonders sicher innerhalb des Sensorgehäuses befestigt werden.

In einer Ausführungsform des erfindungsgemäßen Systems, weist das Sensorgehäuse oder die Befestigungsvorrichtung einen visuellen Hinweis auf, der einen Nutzer des Systems darüber informiert, dass die Befestigungsvorrichtung eine Druckausgleichsleitung aufweist. In einer alternativen oder ergänzenden Ausführungsform informiert ein visueller Hinweis einen Nutzer des Systems darüber, dass die Befestigungsvorrichtung nur durch eine funktionsgleiche Befestigungsvorrichtung ersetzt werden soll. Insbesondere wird hierdurch ein Schaden durch die Verwendung einer Befestigungsvorrichtung ohne Druckausgleichsleitung vermieden. Der visuelle Hinweis kann ein Schriftzug, eine Farbe, ein Strichcode oder ein QR-Code sein.

Gemäß einem dritten Aspekt der Erfindung wird die erfindungsgemäße Aufgabe gelöst durch eine Verwendung des Systems zur Befestigung eines Sensors gemäß mindestens einer Ausführungsform gemäß dem zweiten Aspekt der Erfindung in einer staubbelasteten und spritzwasserbelasteten Umgebung der Industrie oder der Landwirtschaft, insbesondere in einer zur Nutztierhaltung vorgesehenen Umgebung.

Die erfindungsgemäße Befestigungsvorrichtung gemäß dem ersten Aspekt Erfindung und das erfindungsgemäße System gemäß dem zweiten Aspekt der Erfindung sind besonders vorteilhaft für eine Verwendung innerhalb einer staubbelasteten und/oder spritzwasserbelasteten Umgebung. In einer derartigen Umgebung sollte das Sensorgehäuse derart staubdicht und spritzwasserdicht ausgestaltet sein, dass ein Druckausgleich über eine Druckausgleichsleitung notwendig ist. Daher kommen in dieser Umgebung die für den ersten und zweiten Aspekt der Erfindung genannten Vorteile besonders vorteilhaft zum Tragen. Gemäß einem alternativen Aspekt der Erfindung ist das System derart ausgestaltet, dass Sensorgehäuse und Befestigungsvorrichtung zusammen einteilig ausgebildet sind. Das System weist hierbei durch die einteilige Herstellung keinen Verbindungsbereich oder Gegenverbindungsbereich auf. In dem Sensorgehäuse gemäß diesem alternativen Aspekt der Erfindung ist ein Sensor anordnenbar und die Befestigungsvorrichtung ist derart mit einer Druckausgleichsleitung ausgebildet, dass die Befestigungsvorrichtung ein spritzwasserdichtes und staubdichtes einteiliges System mit dem Sensorgehäuse bildet, wobei eine flüssigkeitsdichte und gasdurchlässige Membran an oder in der Druckausgleichsleitung angeordnet ist. Vorzugsweise ist die Druckausgleichsleitung gemäß dem alternativen Aspekt der Erfindung derart gekrümmt, dass sich die Druckausgleichsstromrichtung während eines Druckausgleichs mindestens einmal ändert. Eine einteilige Ausbildung von Befestigungsvorrichtung und Sensorgehäuse kann besonders vorteilhaft durch 3D-Druck hergestellt werden.

Die Erfindung soll nun anhand von in den Figuren schematisch dargestellten, vorteilhaften Ausführungsbeispielen näher erläutert werden. Von diesen zeigen im Einzelnen:
- Fig. 1: eine schematische Schnittdarstellung eines ersten Ausführungsbeispiels der erfindungsgemäßen Befestigungsvorrichtung;
- Fig. 2: eine schematische Schnittdarstellung eines Ausführungsbeispiels der erfindungsgemäßen Befestigungsvorrichtung, wobei die Druckausgleichsleitung Krümmungen an mehreren Stellen aufweist;

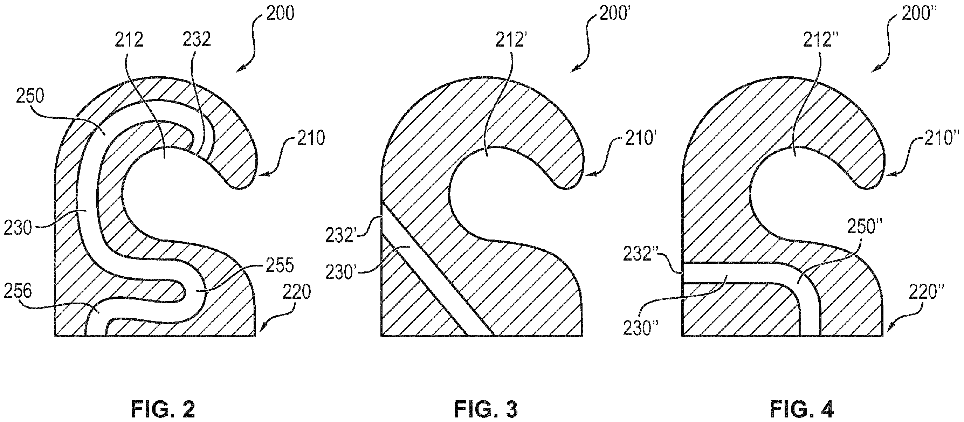

- Figs, 3, 4: nicht zur Erfindung gehörende Beispiele einer Befestigungsvorrichtung, wobei die Druckausgleichsleitung keine Krümmung aufweist (Fig. 3), eine Krümmung an einer Stelle aufweist (Fig. 4);

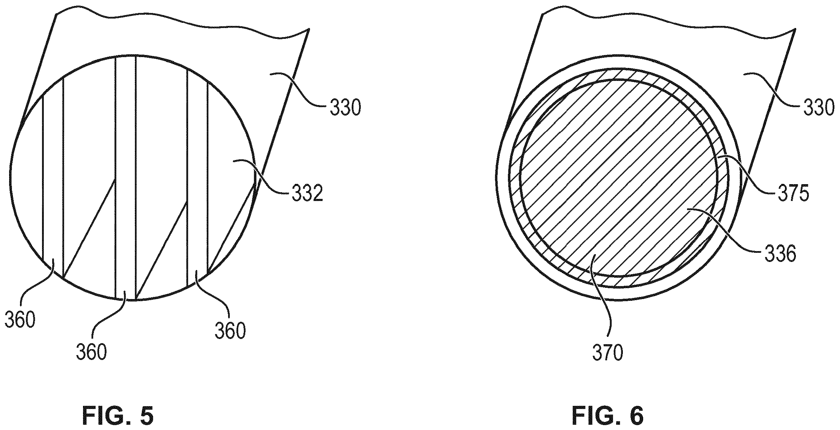

- Figs. 5,6: eine Ansicht einer Umgebungsöffnung mit einer Mehrzahl von Lamellen (Fig. 5) und eine Ansicht einer Gehäuseöffnung mit einer an der Gehäuseöffnung anliegenden Membran (Fig. 6) eines fünften Ausführungsbeispiels der erfindungsgemäßen Befestigungsvorrichtung;

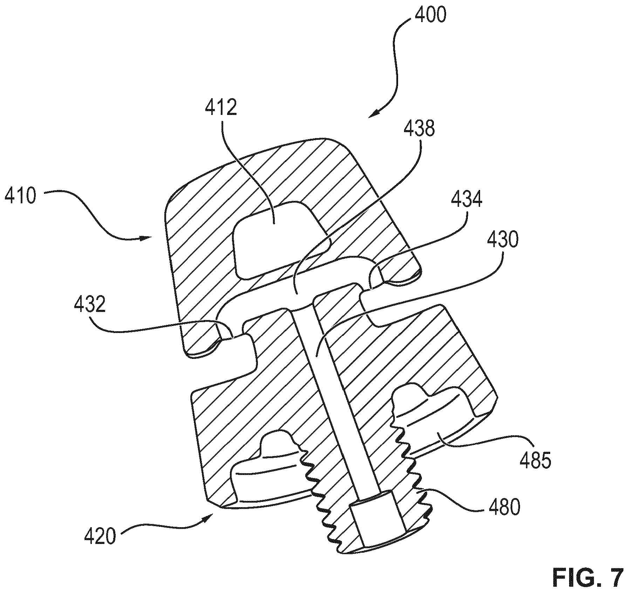

- Fig. 7: eine Schnittdarstellung einer nicht zur Erfindung gehörendenBefestigungsvorrichtung;

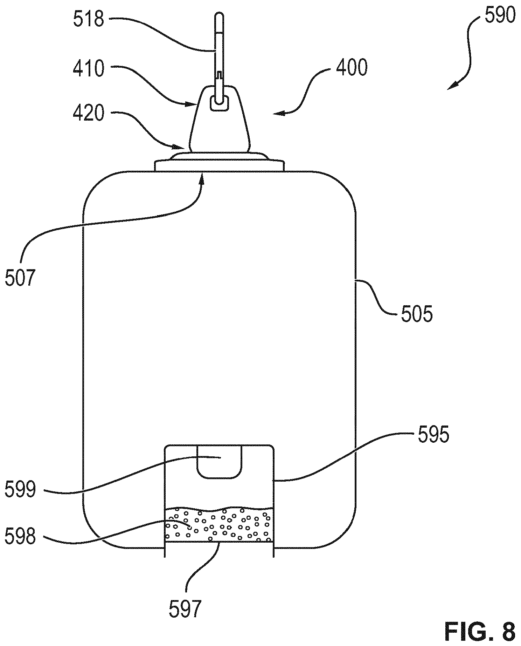

- Fig. 8: eine schematische Ansicht eines ersten Ausführungsbeispiels des erfindungsgemäßen Systems;

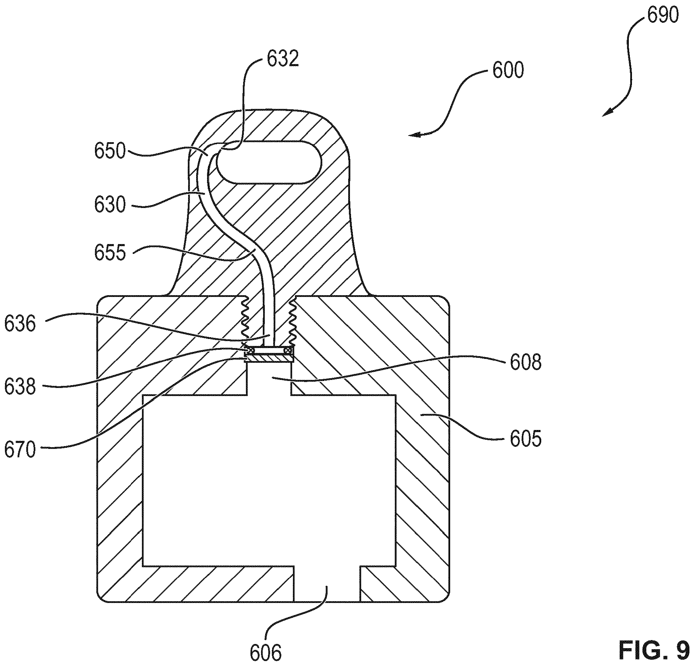

- Fig. 9: eine Schnittdarstellung eines zweiten Ausführungsbeispiels des erfindungsgemäßen Systems.

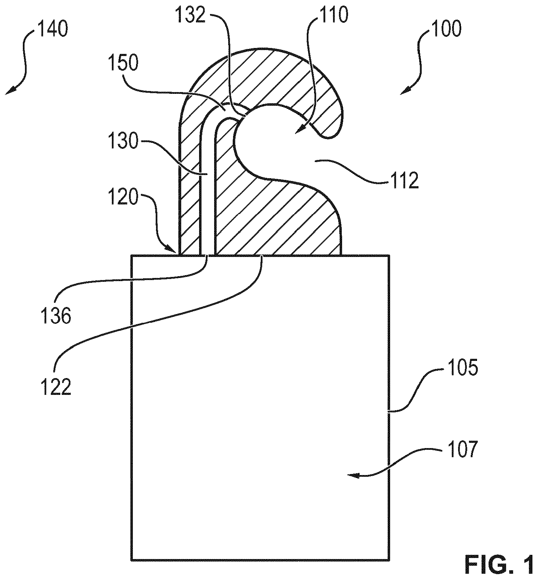

Fig. 1 zeigt eine Schnittdarstellung eines ersten Ausführungsbeispiels der erfindungsgemäßen Befestigungsvorrichtung 100.

Die Befestigungsvorrichtung 100 weist einen Eingriffsbereich 110, einen Verbindungsbereich 120 und eine Druckausgleichsleitung 130 auf.

Der Eingriffsbereich 110 weist einen Eingriff 112 auf, der in dem dargestellten ersten Ausführungsbeispiels als Haken ausgebildet ist. Der Eingriff 112 ist dazu ausgebildet, eine Befestigung der Befestigungsvorrichtung 100 über ein in den Eingriff 112 eingreifendes externes Befestigungselement (nicht dargestellt) zu ermöglichen. Das externe Befestigungselement ist beispielsweise eine Schraube oder ein Haken. In einem nicht dargestellten Ausführungsbeispiel ist der Eingriff ein Loch zum Eingreifen einer Schraube, wobei die Befestigungsvorrichtung als ein über die Schraube an einer Wand anordnenbares Gestell, insbesondere als an einer Wand zu befestigender Winkel, ausgebildet ist.

Der Verbindungsbereich 120 ist ausgebildet, eine spritzwasserdichte und staubdichte Verbindung 122 zwischen Befestigungsvorrichtung 100 und Sensorgehäuse 105 bereitzustellen. Das Sensorgehäuse 105 ist nicht Teil der Befestigungsvorrichtung 100. Die genaue Ausgestaltung des Sensorgehäuses 105 ist in Fig. 1 nicht dargestellt. Die Verbindung 122 ist in dem dargestellten Ausführungsbeispiel durch eine Klebung zwischen Befestigungsvorrichtung 100 und Sensorgehäuse 105 realisiert. In einem nicht zur Erfindung gehörenden Beispiel ist die Verbindung durch eine formschlüssige Verbindung realisiert (siehe Fig. 7). In einem weiteren nicht dargestellten Ausführungsbeispiel ist die Verbindung durch eine kraftschlüssige Verbindung realisiert. In einem anderen nicht dargestellten Ausführungsbeispiel ist die Verbindung durch ein Verschweißen von Sensorgehäuse und Befestigungsvorrichtung hergestellt.

Die Druckausgleichsleitung 130 ist ausgebildet, einen Druckausgleich zwischen einem Inneren 107 des Sensorgehäuses 105 und einer Umgebung 140 der Befestigungsvorrichtung 100 zu ermöglichen. Dieser Druckausgleich kann sowohl zu einem Luftstrom aus dem Sensorgehäuse 105 in die Umgebung 140 führen, als auch zu einem Luftstrom in umgekehrter Richtung, also von der Umgebung 140 in das Sensorgehäuse 105 hinein, abhängig von den vorherrschenden Druckverhältnissen. Die Druckausgleichsleitung 130 weist im verbundenen Zustand von Befestigungsvorrichtung 100 und Sensorgehäuse 105 mindestens eine Umgebungsöffnung 132 zu der Umgebung 140 der Befestigungsvorrichtung 100 und mindestens eine Gehäuseöffnung 136 im Verbindungsbereich 120 derart auf, dass durch die Druckausgleichsleitung 130 der Druckausgleich zwischen dem Inneren 107 des Sensorgehäuses 105 und der Umgebung 140 über die Umgebungsöffnung 132 und die Gehäuseöffnung 136 möglich ist. Vorliegend weist die Befestigungsvorrichtung 100 genau eine Umgebungsöffnung 132 auf, die in dem Eingriffsbereich 110 angeordnet ist. Die Druckausgleichsleitung 130 weist eine derartige Krümmung 150 auf, dass eine Druckausgleichsstromrichtung sich während eines Druckausgleichs mindestens einmal ändert, wobei die Druckausgleichsstromrichtung eine Richtung des Luftstroms während des Druckausgleichs relativ zur Befestigungsvorrichtung 100 beschreibt. Diese Krümmung 150 ist durch die Formgebung im Bereich des Eingriffs 112 vorgegeben. Die Krümmung 150 ist dabei derart ausgebildet, dass sich die Druckausgleichsstromrichtung innerhalb der Druckausgleichsleitung 130 um nahezu 180° ändert.

Der Eingriff 112 im Eingriffsbereich 110 ist derart ausgebildet, dass eine sichere Befestigung der Befestigungsvorrichtung 100 über ein Aufhängen an dem Eingriff 112 möglich ist. Hierdurch wird ebenfalls das Sensorgehäuse 105 über die Befestigungsvorrichtung 100 aufgehängt. Im Bereich der Umgebungsöffnung 132 ist die Druckausgleichsleitung 130 zum Sensorgehäuse 105 weisend ausgebildet. Hierdurch weist die Druckausgleichsleitung 130 im Bereich der Umgebungsöffnung 132 derart in eine Richtung, dass im aufgehängten Zustand der Befestigungsvorrichtung 100 ein von der Gehäuseöffnung 136 zu der Umgebungsöffnung 132 gerichteter Luftstrom im Bereich der Umgebungsöffnung 132 in Richtung der Schwerkraft weist.

Figur 2 zeigt eine Schnittdarstellung eines Ausführungsbeispiels der erfindungsgemäßen Befestigungsvorrichtung 200, 200', 200", wobei die Druckausgleichsleitung 230, 230', 230" Krümmungen 250, 255, 256 an mehreren Stellen aufweist. Die Figuren 3 und 4 zeigen nicht zur Erfindung gehörende Beispiele einer Befestigungsvorrichtung, wobei die Druckausgleichsleitung keine Krümmung aufweist (Fig. 3), eine Krümmung 250" an einer Stelle aufweist (Fig. 4). Die jeweilige äußere Formgebung der Befestigungsvorrichtung 200, 200', 200" entspricht der in Fig. 1 gezeigten Formgebung der Befestigungsvorrichtung 100. Insbesondere weist der jeweilige Eingriffsbereich 210, 210', 210" einen jeweiligen Eingriff 212, 212', 212" auf, der zum Anordnen eines Hakens zur sicheren Befestigung geeignet ist. Ein Unterschied zu der Befestigungsvorrichtung 100 ist lediglich durch eine Form der jeweiligen Druckausgleichsleitung 230, 230', 230" gegeben.

Fig. 2 zeigt ein zweites Ausführungsbeispiel der erfindungsgemäßen Befestigungsvorrichtung 200 mit einer mehrfach gekrümmten Druckausgleichsleitung 230. Die Umgebungsöffnung 232 ist im Bereich des Eingriffs 212 ausgebildet. Die Druckausgleichsleitung 230 erstreckt sich über die Länge des hakenförmigen Eingriffs 212 mit einer entsprechenden Krümmung 250. Die Druckausgleichsleitung 230 weist weitere Krümmungen 255, 256 im Bereich eines Übergangs zwischen Eingriffsbereich 210 und Verbindungsbereich 220 auf.

Fig. 3 zeigt ein nicht zur Erfindung gehörendes Beispiel einer Befestigungsvorrichtung 200' mit einer Druckausgleichsleitung 230' ohne eine Krümmung. Eine derartige Druckausgleichsleitung 230' kann besonders einfach, beispielsweise durch eine Bohrung oder durch einen Schieber innerhalb einer Spritzgussform, bereitgestellt werden. Die Umgebungsöffnung 232' ist hierbei außerhalb des hakenförmigen Eingriffs 212' ausgebildet.

Fig. 4 zeigt ein weiteres nicht zur Erfindung gehörendes Beispiel einer Befestigungsvorrichtung 200" mit einer Druckausgleichsleitung 230" mit einer Krümmung 250" und der Umgebungsöffnung 232" im Bereich eines Übergangs zwischen Eingriffsbereich 210" und Verbindungsbereich 220". Die Krümmung 250" führt dazu, dass sich die Druckausgleichsstromrichtung innerhalb der Druckausgleichsleitung 230" um etwa 90° ändert.

Fig. 5 zeigt eine Ansicht einer Umgebungsöffnung 332 mit einer Mehrzahl von Lamellen 360 eines fünften Ausführungsbeispiels der erfindungsgemäßen Befestigungsvorrichtung (nicht dargestellt).

Die Lamellen 360 erstrecken sich in die Druckausgleichsleitung 330. Hierdurch können die Lamellen 360 ein Eindringen von Staub und Spritzwasser erschweren. In dem dargestellten Ausführungsbeispiel bildet die Druckausgleichsleitung 330 einen Luftkanal mit einem Durchmesser von mehr als 1 mm, insbesondere einen Durchmesser zwischen 2 mm und 3 mm, nämlich vorliegend 2,5 mm. Die Umgebungsöffnung 332 weist weiterhin einen Querschnitt von mehr als 3 mm² auf.

In einem nicht dargestellten alternativen Ausführungsbeispiel ist an der Umgebungsöffnung der Druckausgleichsleitung zum Schutz vor Staub und Spritzwasser ein Gitter angeordnet.

Fig. 6 zeigt eine Ansicht einer Gehäuseöffnung 336 des fünften Ausführungsbeispiels der Befestigungsvorrichtung mit einer an der Gehäuseöffnung 336 anliegenden Membran 370.

Die Membran 370 ist flüssigkeitsdicht und gasdurchlässig, sodass ein Druckausgleich durch die Membran 370 möglich ist. Die Membran 370 wird in der Gehäuseöffnung 336 durch eine Verjüngung 375 der Druckausgleichsleitung 330 gehalten. Dadurch, dass die Membran 370 flüssigkeitsdicht ist, kann durch die Membran 370 insbesondere ein Eintreten von Spritzwasser in das mit der Druckausgleichsleitung 330 in Verbindung stehende Sensorgehäuse vermieden werden.

Im Bereich der Gehäuseöffnung 336 weist die Druckausgleichsleitung 330 dieselben Maße auf, wie im Bereich der Umgebungsöffnung 332.

Fig. 7 zeigt eine Schnittdarstellung einer nicht zur Erfindung gehörenden Befestigungsvorrichtung 400.

Der Eingriffsbereich 410 der Befestigungsvorrichtung 400 unterscheidet sich von den dargestellten Eingriffsbereichen der bereits diskutierten Ausführungsbeispiele dadurch, dass der Eingriff 412 nicht als ein Haken, sondern in Form eines Halteringes ausgebildet ist. Dies ermöglicht besonders vorteilhaft ein Aufhängen der Befestigungsvorrichtung 400, da es besonders unwahrscheinlich ist, dass das externe Befestigungsmittel ohne eine entsprechende manuelle Bewegung aus dem Haltering rutscht.

Der Verbindungsbereich 420 unterscheidet sich von dem in Fig. 1 dargestellten Verbindungsbereich 120 dadurch, dass eine Verbindung nicht mittels Klebung, sondern formschlüssig, insbesondere durch einen Schraubverschluss 480, bereitgestellt werden kann. Dies ermöglicht eine besonders einfache, manuell herstellbare Verbindung von Befestigungsvorrichtung 400 und Sensorgehäuse. Weiterhin weist der Verbindungsbereich 420 einen umlaufenden Vorsprung 485 auf, den die Befestigungsvorrichtung 400 über ihren kompletten Umfang aufweist, und der dadurch in Kombination mit dem Schraubverschluss 480 die spritzwasserdichte und staubdichte Verbindung gewährleistet.

Die Druckausgleichsleitung 430 unterscheidet sich von den dargestellten Druckausgleichsleitungen der bereits diskutierten Ausführungsbeispiele dadurch, dass sie zwei Umgebungsöffnungen 432, 434 an gegenüberliegenden Stellen des Eingriffsbereiches 410 aufweist. Die zwei Umgebungsöffnungen 432, 434 sind hierbei derart symmetrisch an der Befestigungsvorrichtung 400 angeordnet, dass die Druckausgleichsleitung 430 T-förmig ausgestaltet ist. Weiterhin ist der Bereich 438 der Druckausgleichsleitung 400, der die zwei Umgebungsöffnungen 432, 434 miteinander verbindet, ohne zusätzliche Prallflächen ausgebildet. Dies ermöglicht einen direkten Strom von Staub oder Spritzwasser von einer Umgebungsöffnung 432 zur nächsten Umgebungsöffnung 434, ohne dass Ablagerungen in der Druckausgleichsleitung 430 verbleiben.

Die Befestigungsvorrichtung 400 ist weiterhin einteilig ausgebildet. In dem vorliegenden Ausführungsbeispiel wurde dies mittels 3D-Druckverfahren realisiert. Die Befestigungsvorrichtung 400 ist dabei aus Polyamid gebildet. In einem alternativen Ausführungsbeispiel ist die Befestigungsvorrichtung aus Metall gebildet.

Fig. 8 zeigt eine schematische Ansicht eines ersten Ausführungsbeispiels des erfindungsgemäßen Systems 590.

Das System 590 umfasst die in Fig. 7 gezeigte Befestigungsvorrichtung 400 und ein Sensorgehäuse 505.

In dem Sensorgehäuse 505 ist der Sensor 595 anordnenbar und vorliegend auch angeordnet. Bei dem Sensor 595 handelt es sich vorliegend um einen NH3-Sensor. Ein fehlender Druckausgleich zwischen dem Inneren des Sensorgehäuses und der Umgebung kann eine Funktionalität des Sensors 595 gefährden, da typischerweise auf einer Sensormembran 597 des Sensors 595 eine Flüssigkeit 598 aufliegt, die durch die Sensormembran 597 gedrückt werden kann. Fehlende Flüssigkeit führt allerdings dazu, dass eine zur Detektion notwendige Interaktion zwischen Flüssigkeit 598 und einem zu detektierenden Gas, vorliegend NH3, nicht bestimmungsgemäß abläuft. Nur mit einer entsprechend vorbestimmten Menge an Flüssigkeit 598 im Sensor 595 kann der gasförmige Analyt durch einen Detektor 599 des Sensors 595 bestimmungsgemäß detektiert werden. Daher ist der über die Befestigungsvorrichtung 400 ermöglichte Druckausgleich mit dem Sensorgehäuse 505 besonders vorteilhaft geeignet, die Anordnung eines funktionierenden Sensors 595 aus Flüssigkeit 598, Detektor 599 und Sensormembran 597 in dem Sensorgehäuse 505 zu ermöglichen.

Das Sensorgehäuse 505 weist einen Gegenverbindungsbereich 507 auf, der dazu ausgebildet ist, mit dem Verbindungsbereich 420 der Befestigungsvorrichtung 400 eine spritzwasserdichte und staubdichte Verbindung auszubilden. Vorliegend handelt es sich dabei, wie aus Fig. 7 ersichtlich, um eine formschlüssige Schraubverbindung. Der Gegenverbindungsbereich 507 weist eine nicht dargestellte zur Gehäuseöffnung 436 korrespondierende Druckausgleichsöffnung des Sensorgehäuses 505 auf.

Als externes Befestigungselement 518 wird vorliegend ein Karabinerhaken verwendet, der in den als Haltering ausgestalteten Eingriff 412 des Eingriffsbereiches 410 eingreift.

Fig. 9 zeigt eine Schnittdarstellung eines zweiten Ausführungsbeispiels des erfindungsgemäßen Systems 690.

Das System 690 unterscheidet sich von dem in Fig. 8 dargestellten System 590 dadurch, dass kein Sensor in dem Sensorgehäuse 605 angeordnet ist, sondern lediglich eine Aufnahme 606 für einen Gassensor in dem Sensorgehäuse 605 ausgebildet ist.

Anders als in dem System 590, weist die Befestigungsvorrichtung 600 des Systems 690 im Bereich der Gehäuseöffnung 636 einen O-Ring 638 auf, der während eines verbundenen Zustands von Befestigungsvorrichtung 600 und Sensorgehäuse 605, eine Membran 670 in eine für die Membran 670 vorgesehene Position presst. Neben mehrerer, vorliegender Krümmungen 650, 655 der Druckausgleichsleitung 630 reduziert die Membran 670 zusätzlich die Wahrscheinlichkeit, dass Schmutz, Staub oder Spritzwasser in das Sensorgehäuse 605 eindringen.

Fig. 9 veranschaulicht weiterhin, dass eine im Gegenverbindungsbereich 607 des Sensorgehäuses 605 ausgebildete Druckausgleichsöffnung 608 zu der Gehäuseöffnung 636 der Befestigungsvorrichtung 600 korrespondierend ausgebildet ist. Hierdurch wird ein Druckausgleich über die Druckausgleichsöffnung 608, die Membran 607, den O-Ring 638, die Gehäuseöffnung 636, die Druckausgleichsleitung 630 und die Umgebungsöffnung 632 ermöglicht.

Gemäß einem nicht dargestellten alternativen Aspekt der Erfindung umfasst das erfindungsgemäße System eine Befestigungsvorrichtung und ein Sensorgehäuse, wobei Befestigungsvorrichtung und Sensorgehäuse zusammen einteilig ausgebildet sind. Dabei ist die Druckausgleichsleitung im Bereich der Befestigungsvorrichtung in das System integriert, wobei eine flüssigkeitsdichte und gasdurchlässige Membran in oder an der Druckausgleichsleitung angeordnet ist. Das System gemäß dem alternativen Aspekt der Erfindung ist spritzwasserdicht und staubdicht ausgebildet und erlaubt dabei dennoch einen Druckausgleich über die Druckausgleichsleitung zwischen dem Inneren des Sensorgehäuses und der Umgebung des Systems. Das System kann beispielsweise wie das System 590 oder 690 ausgebildet sein, mit dem einzigen Unterschied, dass auf Grund der einteiligen Herstellung kein Verbindungsbereich und kein Gegenverbindungsbereich in dem System ausgebildet sind, so dass die die Verbindung betreffenden Vorrichtungsmerkmale entfallen, wie beispielsweise der O-Ring 638. Weiterhin ist das Sensorgehäuse vorzugsweise derart ausgebildet, dass der Gassensor von einer Außenseite des Sensorgehäuses in das Sensorgehäuse, insbesondere in die Aufnahme des Sensorgehäuses, eingebracht werden kann.

Ausführungsbeispiele der erfindungsgemäßen Befestigungsvorrichtung und des erfindungsgemäßen Systems sind besonders geeignet für eine Verwendung in einer staubbelasteten und/oder spritzwasserbelasteten Umgebung der Industrie oder der Landwirtschaft, insbesondere in einer zur Nutztierhaltung vorgesehenen Umgebung.

### Bezugszeichenliste

- 100, 200, 200', 200", 400, 600: Befestigungsvorrichtung
- 105,505,605: Sensorgehäuse
- 107: Innere des Sensorgehäuses
- 110, 210, 210', 210", 410: Eingriffsbereich
- 112, 212, 212', 212", 412: Eingriff
- 120, 220, 220", 420: Verbindungsbereich
- 122: Verbindung
- 130, 230, 230', 230",: Druckausgleichsleitung
- 330, 430, 630 132, 232, 232', 232",: Umgebungsöffnung
- 332, 432, 632 136,336,636: Gehäuseöffnung
- 140: Umgebung
- 150, 250, 255, 256,: Krümmung
- 255", 650, 655 360: Lamelle
- 370,670: Membran
- 375: Verjüngung
- 434: weitere Umgebungsöffnung
- 438: Bereich der Druckausgleichleitung
- 480: Schraubverschluss
- 485: Vorsprung
- 507: Gegenverbindungsbereich
- 518: externes Befestigungselement
- 590, 690: System
- 595: Sensor
- 597: Sensormembran
- 598: Flüssigkeit des Sensors
- 599: Detektor des Sensors
- 606: Aufnahme im Sensorgehäuse
- 608: Druckausgleichsöffnung
- 638: O-Ring

## Patentansprüche

1. Befestigungsvorrichtung (100) für ein Sensorgehäuse (105) mit
- einem Eingriffsbereich (110), der ausgebildet ist, einen Eingriff (112) für ein externes Befestigungselement (518) für eine Befestigung der Befestigungsvorrichtung (100) über das externe Befestigungselement (518) bereitzustellen;
- einem Verbindungsbereich (120), der ausgebildet ist, eine spritzwasserdichte und staubdichte Verbindung (122) zwischen Befestigungsvorrichtung (100) und Sensorgehäuse (105) bereitzustellen; und
- einer Druckausgleichsleitung (130), die ausgebildet ist, einen Druckausgleich zwischen einem Inneren des Sensorgehäuses (107) und einer Umgebung (140) der Befestigungsvorrichtung (100) zu ermöglichen,
wobei die Druckausgleichsleitung (130) im verbundenen Zustand von Befestigungsvorrichtung (100) und Sensorgehäuse (105) mindestens eine Umgebungsöffnung (132) zu der Umgebung der Befestigungsvorrichtung (100) und mindestens eine Gehäuseöffnung (136) im Verbindungsbereich (120) derart aufweist, dass durch die Druckausgleichsleitung (130) der Druckausgleich zwischen dem Inneren des Sensorgehäuses (107) und der Umgebung über die Umgebungsöffnung (132) und die Gehäuseöffnung (136) möglich ist, und wobei der Eingriffsbereich (110) derart ausgebildet ist, dass ein Aufhängen des Sensorgehäuses (105) über die Befestigungsvorrichtung (100) an dem Eingriffsbereich (110) möglich ist,
wobei der Eingriffsbereich (110) als ein Haken oder Haltering ausgebildet ist, und wobei die
mindestens eine Umgebungsöffnung (132) der Druckausgleichsleitung (130) an einer Außenfläche des Hakens oder Halterings derart ausgebildet ist, dass das externe Befestigungselement (518) so in den Haken oder Haltering eingreifen kann, dass dabei die Umgebungsöffnung (132) teilweise abgedeckt ist.

2. Befestigungsvorrichtung 100 gemäß Anspruch 1, wobei die Befestigungsvorrichtung (100) einteilig ausgebildet ist.

3. Befestigungsvorrichtung (100) gemäß Anspruch 1 oder 2, wobei die Druckausgleichsleitung (130) derart gekrümmt ist, dass eine Druckausgleichsstromrichtung sich während eines Druckausgleichs mindestens einmal ändert, wobei die Druckausgleichsstromrichtung eine Richtung eines Luftstroms während des Druckausgleichs relativ zur Befestigungsvorrichtung (100) beschreibt.

4. Befestigungsvorrichtung (100) gemäß Anspruch 3, wobei die Druckausgleichsleitung (130) derart gekrümmt ist, dass sich die Druckausgleichsstromrichtung um mehr als 90°, insbesondere um mindestens 180°, ändert.

5. Befestigungsvorrichtung (100) gemäß Anspruch 3, wobei die Druckausgleichsleitung (130) an mindestens zwei Stellen derart gekrümmt ist, dass sich die Druckausgleichsstromrichtung während eines Druckausgleichs mindestens zweimal ändert.

6. Befestigungsvorrichtung (100) gemäß mindestens einem der vorhergehenden Ansprüche, wobei die Druckausgleichsleitung (130) mindestens zwei Umgebungsöffnungen (132, 434) zu der Umgebung der Befestigungsvorrichtung (100) aufweist.

7. Befestigungsvorrichtung (100) gemäß Anspruch 5, wobei die Druckausgleichsleitung (130) derart T-förmig ausgebildet ist, dass sie zwei Umgebungsöffnungen (432, 434) an gegenüberliegenden Stellen des Eingriffsbereichs (110) und die Gehäuseöffnung (136) im Verbindungsbereich (120) aufweist.

8. Befestigungsvorrichtung (100) gemäß mindestens einem der vorhergehenden Ansprüche, wobei in oder an der Druckausgleichsleitung (130) eine Membran (370) angeordnet ist, die flüssigkeitsdicht und gasdurchlässig ist.

9. Befestigungsvorrichtung (100) gemäß mindestens einem der vorhergehenden Ansprüche , wobei die Druckausgleichsleitung (130) im Bereich der Umgebungsöffnung (132) derart in eine Richtung weist, dass im aufgehängten Zustand der Befestigungsvorrichtung (100) ein von der Gehäuseöffnung (136) zu der Umgebungsöffnung (132) gerichteter Luftstrom im Bereich der Umgebungsöffnung (132) in Richtung der Schwerkraft weist.

10. System (590) zur Befestigung eines Sensors (595), mit
- einer Befestigungsvorrichtung (400) gemäß mindestens einem der vorhergehenden Ansprüche, und
- einem Sensorgehäuse (505), wobei in dem Sensorgehäuse (505) ein Sensor (595) anordnenbar ist, und wobei das Sensorgehäuse (505) einen Gegenverbindungsbereich (507) aufweist, der dazu ausgebildet ist, mit dem Verbindungsbereich (420) der Befestigungsvorrichtung (400) eine spritzwasserdichte und staubdichte Verbindung auszubilden.

11. System (590) gemäß Anspruch 10, wobei der Verbindungsbereich (420) der Befestigungsvorrichtung (400) und der Gegenverbindungsbereich (507) des Sensorgehäuses (505) ausgebildet sind, eine Schraubverbindung als spritzwasserdichte und staubdichte Verbindung bereitzustellen.

12. System (590) gemäß Anspruch 10 oder 11, weiterhin aufweisend einen Gassensor (595), insbesondere einen NH3-Sensor, der in dem Sensorgehäuse (505) angeordnet ist.

13. Verwendung des Systems (590) zur Befestigung eines Sensors (595) gemäß mindestens einem der Ansprüche 10 bis 12 in einer staubbelasteten und spritzwasserbelasteten Umgebung der Industrie oder der Landwirtschaft, insbesondere in einer zur Nutztierhaltung vorgesehenen Umgebung.

## Claims

1. Fastening device (100) for a sensor housing (105), having
- an engagement region (110), which is designed to provide an engagement (112) for an external fastening element (518) for a fastening of the fastening device (100) via the external fastening element (518);
- a connecting region (120), which is designed to provide a splash-proof and dust-proof connection (122) between fastening device (100) and sensor housing (105); and
- a pressure-equalizing line (130), which is designed to permit pressure equalization between an interior of the sensor housing (107) and an environment (140) of the fastening device (100),
wherein, in the connected state of fastening device (100) and sensor housing (105), the pressure-equalizing line (130) has at least one environment opening (132) to the environment of the fastening device (100) and at least one housing opening (136) in the connecting region (120) in such a manner that the pressure equalization between the interior of the sensor housing (107) and the environment is possible by the pressure-equalizing line (130) via the environment opening (132) and the housing opening (136), and wherein the engagement region (110) is designed in such a manner that the sensor housing (105) can be hung on the engagement region (110) via the fastening device (100),
wherein the engagement region (110) is designed as a hook or holding ring, and
wherein the at least one environment opening (132) of the pressure-equalizing line (130) is formed on an outer surface of the hook or holding ring in such a manner that the external fastening element (518) can engage in the hook or holding ring such that the environment opening (132) is partially covered.

2. Fastening device (100) according to Claim 1, wherein the fastening device (100) is designed as a single part.

3. Fastening device (100) according to Claim 1 or 2, wherein the pressure-equalizing line (130) is curved in such a manner that a pressure-equalizing flow direction during a pressure equalization changes at least once, wherein the pressure-equalizing flow direction describes a direction of an air flow during the pressure equalization relative to the fastening device (100).

4. Fastening device (100) according to Claim 3, wherein the pressure-equalizing line (130) is curved in such a manner that the pressure-equalizing flow direction changes by more than 90°, in particular by at least 180°.

5. Fastening device (100) according to Claim 3, wherein the pressure-equalizing line (130) is curved at at least two points in such a manner that the pressure-equalizing flow direction changes at least twice during a pressure equalization.

6. Fastening device (100) according to at least one of the preceding claims, wherein the pressure-equalizing line (130) has at least two environment openings (132, 434) to the environment of the fastening device (100).

7. Fastening device (100) according to Claim 5, wherein the pressure-equalizing line (130) is of T-shape design in such a manner that it has two environment openings (432, 434) at opposite points of the engagement region (110) and the housing opening (136) in the connecting region (120).

8. Fastening device (100) according to at least one of the preceding claims, wherein a membrane (370) which is liquid-proof and gas-permeable is arranged in or at the pressure-equalizing line (130).

9. Fastening device (100) according to at least one of the preceding claims, wherein the pressure-equalizing line (130) in the region of the environment opening (132) points in a direction in such a manner that, in the hung state of the fastening device (100), an airflow directed from the housing opening (136) to the environment opening (132) points in the direction of gravity in the region of the environment opening (132).

10. System (590) for fastening a sensor (595), having
- a fastening device (400) according to at least one of the preceding claims, and
- a sensor housing (505), wherein a sensor (595) can be arranged in the sensor housing (505), and wherein the sensor housing (505) has a mating connecting region (507) which is designed to form a splash-proof and dust-proof connection with the connecting region (420) of the fastening device (400).

11. System (590) according to Claim 10, wherein the connecting region (420) of the fastening device (400) and the mating connecting region (507) of the sensor housing (505) are designed to provide a screw connection as the splash-proof and dust-proof connection.

12. System (590) according to Claim 10 or 11, furthermore having a gas sensor (595), in particular an NH3 sensor, which is arranged in the sensor housing (505).

13. Use of the system (590) for fastening a sensor (595) according to at least one of Claims 10 to 12 in an industrial or agricultural environment exposed to dust and splash water, in particular in an environment provided for livestock farming.

## Revendications

1. Dispositif de fixation (100) destiné à un boîtier (105) de capteur, comprenant
- une zone (110) de venue en prise, conçue pour offrir une pénétration (112) à un élément extérieur de fixation (518), en vue de fixer ledit dispositif de fixation (100) par l'intermédiaire dudit élément extérieur de fixation (518) ;
- une zone de liaison (120) conçue pour procurer une liaison (122) étanche aux projections d'eau et étanche à la poussière, entre ledit dispositif de fixation (100) et ledit boîtier (105) de capteur ; et
- un conduit (130) d'équilibrage de pression, conçu pour permettre un équilibrage de la pression entre un espace interne (107) dudit boîtier de capteur et un espace (140) environnant ledit dispositif de fixation (100),
sachant que ledit conduit (130) d'équilibrage de pression comporte, à l'état relié du dispositif de fixation (100) et du boîtier (105) de capteur, au moins une ouverture (132) située côté environnement et gagnant l'espace environnant ledit dispositif de fixation (100), et au moins une ouverture (136) située côté boîtier, dans la zone de liaison (120), de façon telle que l'équilibrage de la pression soit possible au moyen dudit conduit (130) d'équilibrage de pression, entre l'espace interne (107) dudit boîtier de capteur et l'espace environnant, par l'intermédiaire de ladite ouverture (132) située côté environnement et de ladite ouverture (136) située côté boîtier,
sachant que la zone (110) de venue en prise est conçue afin de permettre une suspension du boîtier (105) de capteur, par l'intermédiaire du dispositif de fixation (100), au niveau de ladite zone (110) de venue en prise,
laquelle zone (110) de venue en prise est réalisée sous la forme d'un crochet ou d'un anneau de retenue, et
sachant qu'au niveau d'une surface extérieure du crochet ou de l'anneau de retenue, l'ouverture (132) située côté environnement, à présence minimale sur ledit conduit (130) d'équilibrage de pression, est conçue afin que l'élément extérieur de fixation (518) puisse pénétrer, dans ledit crochet ou dans ledit anneau de retenue, de telle manière que ladite ouverture (132) située côté environnement soit partiellement occultée.

2. Dispositif de fixation (100) selon la revendication 1, ledit dispositif de fixation (100) étant de réalisation monobloc.

3. Dispositif de fixation (100) selon la revendication 1 ou 2, le conduit (130) d'équilibrage de pression étant muni d'une courbure telle qu'une direction du flux d'équilibrage de pression varie au moins une fois au cours d'un équilibrage de la pression, laquelle direction du flux d'équilibrage de pression décrit une direction d'un courant d'air, au cours dudit équilibrage de la pression, par rapport audit dispositif de fixation (100).

4. Dispositif de fixation (100) selon la revendication 3, le conduit (130) d'équilibrage de pression étant muni d'une courbure telle que la direction du flux d'équilibrage de pression varie de plus de 90°, d'au moins 180° en particulier.

5. Dispositif de fixation (100) selon la revendication 3, le conduit (130) d'équilibrage de pression présentant, en au moins deux emplacements, une courbure telle que la direction du flux d'équilibrage de pression varie au moins deux fois au cours d'un équilibrage de la pression.

6. Dispositif de fixation (100) selon au moins l'une des revendications précédentes, le conduit (130) d'équilibrage de pression comptant au moins deux ouvertures (132, 434) situées côté environnement et gagnant l'espace environnant ledit dispositif de fixation (100).

7. Dispositif de fixation (100) selon la revendication 5, le conduit (130) d'équilibrage de pression présentant une réalisation configurée en T, de telle sorte qu'il comprenne deux ouvertures (432, 434) situées côté environnement, en des emplacements mutuellement opposés de la zone (110) de venue en prise, et l'ouverture (136) située côté boîtier dans la zone de liaison (120).

8. Dispositif de fixation (100) selon au moins l'une des revendications précédentes, sachant qu'une membrane (370), étanche aux liquides et perméable aux gaz, est implantée dans ou sur le conduit (130) d'équilibrage de pression.

9. Dispositif de fixation (100) selon au moins l'une des revendications précédentes, le conduit (130) d'équilibrage de pression pointant, dans la région de l'ouverture (132) située côté environnement, dans une direction telle qu'à l'état suspendu dudit dispositif de fixation (100), un courant d'air dirigé vers ladite ouverture (132) située côté environnement, à partir de l'ouverture (136) située côté boîtier, soit orienté dans la direction de la gravité dans ladite région de l'ouverture (132) située côté environnement.

10. Système (590) dévolu à la fixation d'un capteur (595), comprenant
- un dispositif de fixation (400) conforme à au moins l'une des revendications précédentes, et
- un boîtier (505) de capteur, sachant qu'un capteur (595) peut être logé dans ledit boîtier (505), lequel boîtier (505) de capteur est pourvu d'une zone de liaison complémentaire (507) réalisée en vue de constituer, avec la zone de liaison (420) dudit dispositif de fixation (400), une liaison étanche aux projections d'eau et étanche à la poussière.

11. Système (590) selon la revendication 10, la zone de liaison (420) du dispositif de fixation (400), et la zone de liaison complémentaire (507) du boîtier (505) de capteur, étant conçues pour procurer une liaison vissée en tant que liaison étanche aux projections d'eau et étanche à la poussière.

12. Système (590) selon la revendication 10 ou 11, comprenant en outre un capteur de gaz (595) en particulier un capteur de NH₃ logé dans le boîtier (505) de capteur.

13. Utilisation du système (590) conforme à au moins l'une des revendications 10 à 12, dévolu à la fixation d'un capteur (595) dans un environnement industriel ou agricole chargé de poussière et affecté par des projections d'eau, en particulier dans un environnement prévu pour l'élevage d'animaux de ferme.
